# EUROPÄISCHE PATENTANMELDUNG

(11) **EP 3 153 939 A1**
(43) Veröffentlichungstag der Anmeldung: **12.04.2017**
(21) Anmeldenummer: 15188362.6
(22) Anmeldetag: 05.10.2015
(51) Int. Cl.: G05B 19/4065

(54) **SORTIERANLAGE FÜR SORTIERGUT MIT DEZENTRALEN FUNKTIONSEINHEITEN ZUR DETEKTION VON FEHLERZUSTÄNDEN**

(71) Anmelder: Siemens Aktiengesellschaft, 80333 München (DE)
(72) Erfinder: GLUCH, Alfred, 42103 Wuppertal (DE); HOOS, Norbert, 91091 Grossenseebach (DE); MOSCHÜRING, Heinz-Gerd, 46446 Emmerich am Rhein (DE); SCHMID, Markus, 72622 Nürtingen (DE); SUESS, Ulrich, 09112 Chemnitz (DE); RANFT, Johannes, 79730 Murg (DE)
(74) Vertreter: Maier, Daniel Oliver

(57) **Zusammenfassung**

Die Erfindung offenbart eine Sortieranlage (2) für Sortiergut (4 bis 8), wie zum Beispiel Postsendungen, Päckchen, Pakete, Gepäckstücke, Koffer und dergleichen, umfassend:
a) eine Anzahl von Tragelementen (10 bis 14) für das Sortiergut (4 bis 8);
b) eine Anzahl von Förderstrecken (16, 18), auf denen und/oder entlang derer die Tragelemente (10 bis 14) zu Zielstellen (20 bis 28) beförderbar sind, um das Sortiergut (4 bis 8) von dem jeweiligen Tragelement (10 bis 14) in die Zielstelle (20 bis 28) zu entleeren;
c) eine Anlagensteuerung (30), die die Bewegung der Tragelemente (10 bis 14) entlang der Förderstrecken (16, 18) und die Entleerung an den Zielstellen (20 bis 28) steuert; und
d) mindestens eine dezentrale Funktionseinheit (34, 36), die Prozessinformationen zu den Förderstrecken (16, 18) und/oder den Tragelementen (10 bis 14) empfangen und im Wege von Vergleichen mit Soll-Prozessinformationen Abweichung von den Soll-Prozessinformationen detektieren und an die Anlagensteuerung (30) melden.

Auf diese Weise ist es möglich die dezentralen Funktionseinheiten wie eine Art Wächter für ein bestimmtes Anlagenteil und/oder einen bestimmten Anlagen- oder Umgebungsbereich einzusetzen, die über eine entsprechende rechnergestützte Intelligenz verfügen, um die Abweichungen zu detektieren und an die Anlagensteuerung zu melden. Dieses Vorgehen ermöglicht es daher auch im rauen Klima der laufenden Sortieranlage für Fehler und/oder sich anbahnende Fehler, die für einen Techniker nicht oder nur schlecht erkennbar sind, zuverlässig zu erkennen und somit frühzeitig an die Anlagensteuerung melden zu können.

## Beschreibung

Die Erfindung bezieht sich auf Anlagen wie z.B. Sortieranlage für Sortiergut, wie zum Beispiel Postsendungen, Päckchen, Pakete, Gepäckstücke, Koffer und dergleichen.

In Verteil- und Sortierzentrum für Postsendungen und/oder Stückgut (Pakete, Koffer und dergleichen) - nachfolgend allgemein als Sortiergut bezeichnet - wird das Sortiergut nach vorgebbaren Kriterien mittels mindestens einer Sortieranlage an die jeweils in einer Anlagensteuerung hinterlegte Zielstelle sortiert. Die Sortieranlage besitzt dabei in der Regel eine auf das jeweilig zu sortierende Sortiergut optimierte Ausgestaltung. Während Postsendung in der Regel auf einer Längskante stehend zwischen Förderbändern und Weichen an die jeweilige Zielstelle geleitet werden, werden im Paket- und Flughafenbereich entsprechend grösser dimensionierte Sortieranlagen, wie zum Beispiel Karusselsorter, Kippschalensorter, Querbandsorter, zum Transport und zur Sortierung der Sortiergüter an die jeweilige Zielstelle eingesetzt.

Bei all diesen Sortieranlagen stehen neben einer in der Regel computergestützten Anlagensteuerung ausgeklügelte mechanische Transportmittel für das Sortiergut im Einsatz, für die ein hohes Bedürfnis besteht, bestehende Fehler und/oder sich ankündigende Fehler rechtzeitig aufspüren und dann beheben zu können, bevor es zu grösseren Unterbrüchen im Sortierprozess, der in der Regel zeitkritisch ist, kommen könnte.

Typischerweise werden hierfür derzeit in der Regel Techniker in die Sortieranlage geschickt, die die Förderstrecken ablaufen und auf Fehler hin untersuchen. Zusätzlich sind Sensoren, wie zum Beispiel Lichtschranken und dergleichen, vorhanden, die etwaige Sortiergutstaus und/oder sonstige Sortierunregelmässigkeiten und/oder Füllstände an den Zielstellen, lokal detektieren und an die jeweilig zuständige Anlagensteuereinheit melden. Dennoch bleibt es daher häufig der Erfahrung der Techniker vorbehalten, Fehler an Anlagenteilen der Sortieranlage zu erkennen und entsprechende Abhilfemassnahmen einzuleiten. Da derartige Sortieranlage aber komplexe Systeme sind und bei laufender Anlage häufig ein hoher Geräuschpegel herrscht, ist es für die Techniker nicht immer möglich, auch tatsächlich alle möglichen Fehlerzustände durch optische und/oder akustische Inspektion zu erkennen.

Der vorliegenden Erfindung liegt daher die Aufgabe zugrunde, eine Sortieranlage anzugeben, bei der bestehende Fehler und/oder sich ankündigende Fehler an Anlagenteilen frühzeitig erkannt und an die Anlagensteuerung gemeldet werden können.

Die Aufgabe wird erfindungsgemäss durch eine Sortieranlage für Sortiergut, wie zum Beispiel Postsendungen, Päckchen, Pakete, Gepäckstücke, Koffer und dergleichen, gelöst, umfassend:
a) eine Anzahl von Tragelementen für das Sortiergut;
b) eine Anzahl von Förderstrecken, auf denen und/oder entlang derer die Tragelemente zu Zielstellen beförderbar sind, um das Sortiergut von dem jeweiligen Tragelement in die Zielstelle zu entleeren;
c) eine Anlagensteuerung, die die Bewegung der Tragelemente entlang der Förderstrecken und die Entleerung an den Zielstellen steuert; und
d) mindestens eine dezentrale Funktionseinheit, die Prozessinformationen zu den Förderstrecken und/oder den Tragelementen empfangen und im Wege von Vergleichen mit Soll-Prozessinformationen Abweichung von den Soll-Prozessinformationen detektieren und an die Anlagensteuerung melden.

Auf diese Weise ist es möglich die dezentralen Funktionseinheiten wie ein Art Wächter für ein bestimmtes Anlagenteil und/oder einen bestimmten Anlagen- oder Umgebungsbereich einzusetzen, die über eine entsprechende rechnergestützte Intelligenz verfügen, um die Abweichungen zu detektieren und an die Anlagensteuerung zu melden. Dieses Vorgehen ermöglicht es daher auch im rauen Klima der laufenden Sortieranlage für Fehler und/oder sich anbahnende Fehler, die für einen Techniker nicht oder nur schlecht erkennbar sind, zuverlässig zu erkennen und somit frühzeitig an die Anlagensteuerung melden zu können.

Typischerweise können die Prozessinformationen optischer und/oder akustischer Art sein. Dementsprechend kann die dezentrale Funktionseinheit ein Mikrofon und/oder eine Kamera umfassen, um die aktuelle Umgebungssituation aufzuzeichnen. Grundsätzlich sind aber auch andere Sensoren, wie zum Beispiel Beschleunigungssensoren, Vibrationssensoren, Piezo-Sensoren, Temperature und dergleichen, denkbar.

In einer vorteilhaften Ausgestaltung der vorliegenden Erfindung kann die dezentrale Funktionseinheiten Soll-Prozessinformationen in Form von Bildern und/oder Frequenzspektren gespeichert haben. Damit die dezentrale Funktionseinheit entsprechend der gewünschten Einsatz- und Überwachungsaufgabe beliebig konfigurierbar.

In einer weiteren vorteilhaften Ausgestaltung der vorliegenden Erfindung kann die dezentrale Funktionseinheit eine Auswerteeinheit umfassen, die die aufgenommene Prozessinformation in Form eines Bildvergleichs und/oder einer Fourier-Analyse untersucht. Die entsprechend als Bilder und/oder Fourier-Spektren hinterlegten Soll-Prozessinformation bilden somit die Basis für den eigentlichen Vergleich.

In komplexen Anlagensystemen, zu denen auch Sortieranlagen zählen, besteht zudem das Bedürfnis, die Menge übertragener Prozessdaten auf das Möglichste zu beschränken. Hierzu kann es beitragen, wenn die dezentrale Funktionseinheit einen Katalog von kollateralen Umgebungsinformationen aufweist und derartige Umgebungsinformationen in den Prozessinformationen im Zuge der Auswertung der Prozessinformation erkennt. Auf diese Weise kann dann zwar eine Abweichung der Prozessinformation von der Soll-Prozessinformation festgestellt werden. Diese Abweichung wird aber nicht an die Anlagensteuerung als Fehlermeldung übertragen, wenn sie in dem Katalog der kollateralen Umgebungsinformationen aufgefunden wird. Bespiele hierfür sind Hupsignale eines Gabelstaplers, eine Pausensirene, allgemeine Warnsignale und -hinweise und dergleichen.

Weiter kann es in einer vorteilhaften Ausgestaltung der Erfindung vorgesehen sein, die dezentrale Funktionseinheit einen Katalog von auf einen Fehler hindeutenden Prozessinformationen aufweist, wobei bei einer detektierten Abweichung der aufgenommenen Prozessinformation von der Soll-Prozessinformation diese Abweichung mit dem Inhalt des Katalogs der auf einen Fehler hindeutenden Prozessinformation verglichen wird. Auf diese Weise ist es möglich, zum Beispiel das Auftreten der Abweichung innerhalb eines bestimmten Frequenzbereichs einem fehlerhaften Kugellager oder ähnlichem zuordnen zu können und diesen Fehler somit schon entsprechend melden zu können. Entsprechend wird bei einer Übereinstimmung der detektierten Abweichung mit einer der auf einen Fehler hindeutenden Prozessinformation der dieser Übereinstimmung zugrundeliegende Fehler an die Anlagensteuerung übertragen.

Weitere vorteilhafte Ausgestaltungen der vorliegenden Erfindung können den übrigen abhängigen Ansprüchen entnommen werden.

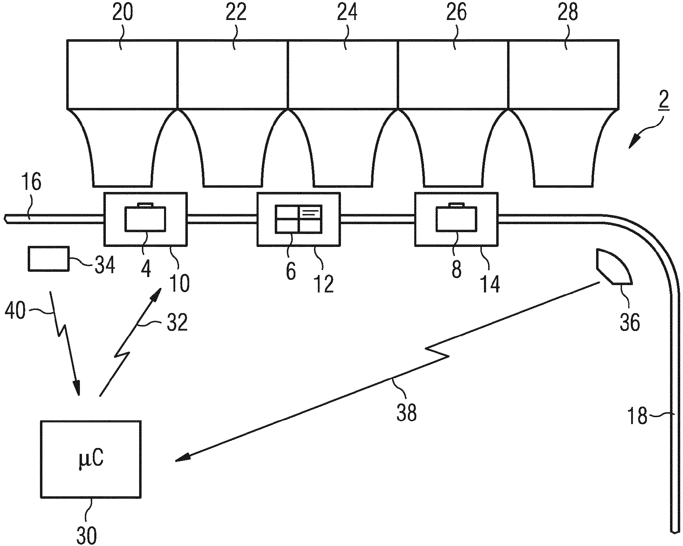

Bevorzugte Ausführungsformen der Erfindung werden nachfolgend anhand einer Zeichnung näher erläutert. Dabei zeigt die Figur eine schematische Aufsicht auf einen Ausschnitt aus einer Sortieranlage 2 für Sortiergut, hier Koffer 4, 8 und ein Paket 6. Eine derartige Sortieranlage 2 befindet sich beispielsweise in einem Flughafen oder einem Paketzentrum.

Die Sortieranlage 2 für Sortiergut, wie zum Beispiel Postsendungen, Päckchen, Pakete 6, Gepäckstücke, Koffer 4, 8 und dergleichen, umfasst eine Anzahl von Transportwagen 10 bis 14 (Tragelemente) für die Koffer 4, 8 und Pakete 6. Die Transportwagen 10 bis 14 können hier nicht weiter dargestellte Kippschalen-Elemente oder Querband-Elemente aufweisen. Weiter umfasst die Sortieranlage 2 eine Anzahl von Förderstrecken 16, 18, auf denen und/oder entlang derer die Transportwagen 10 bis 14 zu Zielstellen 20 bis 28 beförderbar sind, um das Sortiergut entsprechend dem Sortierziel von dem jeweiligen Transportwagen 10 bis 14 in die bestimmungsgemässe Zielstelle 20 bis 28 zu entleeren. Des Weiteren ist eine Anlagensteuerung 30 vorgesehen, die die Bewegung der Transportwagen 10 bis 14 entlang der Förderstrecken 16, 18 und die Entleerung in die Zielstellen 20 bis 28 steuert. Dabei kann es zum Beispiel vorgesehen sein, dass die Anlagensteuerung im Wege einer drahtlosen Kommunikation 32 den Transportwagen 10 bis 14 ein Signal übermittelt, welches das Entleeren eines Koffers 4, 8 in eine der Zielstellen 20 bis 28 triggert. Der Transportwagen 10 bis 14 kann dann beispielsweise selbsttätig das Kippschalenelement zum Abkippen des Koffers 4, 8 neigen oder das Querbandelement zum Austragen des Koffers 4, 8 antreiben. Ebenso ist es auch denkbar, dass ein Kipphebel der Transportwagen 10 bis 14 in eine der Förderstrecke 16, 18 zugeordnete Kulisse eingesteuert wird, um so den Koffer 4, 8 an der gewünschten Zielstelle 20 bis 28 von dem Transportwagen 10 bis 14 abzukippen. An dieser Stelle sei angemerkt, dass diese Vorgänge bestimmten Automatismen folgen und daher auch hinsichtlich der optischen und/oder akustischen Repräsentation bestimmten vorbestimmbaren und auch wiedererkennbaren Mustern folgen können.

Weiter umfasst die Sortieranlage 2 zwei dezentrale Funktionseinheiten 34, 36, die Prozessinformationen zu den Förderstrecken 16, 18 und/oder den Transportwagen 10 bis 14 empfangen. Diese Prozessinformationen sind akustischer und/oder optischer Art und werden von den dezentralen Funktionseinheiten 34 mittels hier nicht weiter dargestellten Mikrophonen und/oder Kameras aufgezeichnet. Weiter sind auch Beschleunigungs- und Vibrationssensoren denkbar. Im Wege von Vergleichen mit Soll-Prozessinformationen, wie zum Beispiel den vorstehend genannten Mustern, können die dezentralen Funktionseinheiten Abweichung der aufgenommenen Prozessinformationen von den Soll-Prozessinformationen detektieren und an die Anlagensteuerung 30 melden. Dabei kann eine Prozessinformation beispielsweise die beim Abkippen eines Sortierguts erreichte Kipp-Höhe eines Kippschalenelements eines Transportwagens 10 bis 14 sein. Weiter kann die Prozessinformation aber auch das Kippgeräusch eines Kippschalenelements und/oder das Laufgeräusch eines Transportwagens 10 bis 14 auf der Förderstrecke 16, 18 sein. Während beispielsweise das Erreichen einer Sollkipphöhe mittels einer Lichtschranke oder durch Auswertung eines Videobildes überprüft werden kann, können die aufgenommenen akustischen Prozessinformationen einer Fourier-Analyse unterzogen und das ermittelte Frequenzspektrum mit einem Soll-Frequenzspektrum verglichen werden. Diese Soll-Prozessinformationen können auf der dezentralen Funktionseinheit 34, 36 zum Beispiel in Form von Videobildern und/oder Frequenzspektren gespeichert werden. Damit ist die dezentrale Funktionseinheit 34, 36 bezüglich ihres Verwendungszweckes jederzeit frei konfigurierbar.

Neben diesen wichtigen Soll-Prozessinformationen kann die dezentrale Funktionseinheit 34, 36 weiter auch noch einen Katalog von kollateralen Umgebungsinformationen aufweisen. Typischerweise sind diese kollateralen Umgebungsinformationen Geräusche oder gegenständliche Begebenheiten, die mit den eigentlichen Prozessinformationen zum Sortiervorgang nicht unmittelbar im Zusammenhang stehen, wie zum Beispiel das Hupsignal eines Gabelstaplers oder eine Warn- oder Pausensirene und dergleichen. Derartige Umgebungsinformationen, die in den Prozessinformationen enthalten sind, werden im Zuge der Auswertung der Prozessinformation durch den Abgleich mit den in dem Katalog enthaltenen kollateralen Prozessinformationen erkannt. Die hierdurch von der Soll-Prozessinformation auftretende Abweichung führt damit nicht zu einer Meldung von der dezentralen Funktionseinheit 34, 36 an die Anlagensteuerung 30.

Weiter können die dezentralen Funktionseinheiten 34, 36 auch einen Katalog von auf einen Fehler hindeutenden Prozessinformationen aufweisen. Typische Einträge dieses Katalogs können zum Beispiel das Frequenzspektrum des durch einen Kugellagerschaden verursachten Geräusches oder die Vibrationen sein, die durch einen Bruch oder einer Unterbruchs einer Schiene der Förderstrecke 16, 18 oder durch eine Flachstelle am Rad eines Transportwagens 10 bis 14 ausgelöst werden. Zeigt sich ein derartiges Phänomen in den aufgenommenen Prozessinformationen führt dies zu einer detektierten Abweichung der aufgenommenen Prozessinformation von der Soll-Prozessinformation. Diese Abweichung wird dann mit dem Inhalt des Katalogs der auf einen Fehler hindeutenden Prozessinformationen verglichen und bei Übereinstimmung mit einem dieser Einträge wird eine dementsprechend zugeordnete Fehlermeldung von der dezentralen Funktionseinheit 34, 36 an die Anlagensteuerung 30 (z.B. an deren Server oder in deren Cloud) gesendet, zum Beispiel im Wege einer drahtlosen Kommunikation (z.B. WLAN) 38, 40.

Durch die beiden letztgenannten Massnahmen kann das Volumen von Fehlermeldungen sehr stark vorgefiltert und somit auf das gerade notwendige Mass beschränkt werden, was in modernen automatisierten Industrieanlagen, wie zum Beispiel in der hier beschriebenen Sortieranlage 2, aufgrund der Vielzahl der zu übertragenden und zu verarbeitenden Daten sehr begrüsst wird.

## Patentansprüche

1. Sortieranlage (2) für Sortiergut (4 bis 8), wie zum Beispiel Postsendungen, Päckchen, Pakete, Gepäckstücke, Koffer und dergleichen, umfassend:
a) eine Anzahl von Tragelementen (10 bis 14) für das Sortiergut (4 bis 8);
b) eine Anzahl von Förderstrecken (16, 18), auf denen und/oder entlang derer die Tragelemente (10 bis 14) zu Zielstellen (20 bis 28) beförderbar sind, um das Sortiergut (4 bis 8) von dem jeweiligen Tragelement (10 bis 14) in die Zielstelle (20 bis 28) zu entleeren;
c) eine Anlagensteuerung (30), die die Bewegung der Tragelemente (10 bis 14) entlang der Förderstrecken (16, 18) und die Entleerung an den Zielstellen (20 bis 28) steuert; und
d) mindestens eine dezentrale Funktionseinheit (34, 36), die Prozessinformationen zu den Förderstrecken (16, 18) und/oder den Tragelementen (10 bis 14) empfangen und im Wege von Vergleichen mit Soll-Prozessinformationen Abweichung von den Soll-Prozessinformationen detektieren und an die Anlagensteuerung (30) melden.

2. Sortieranlage (2) nach Anspruch 1,
**dadurch gekennzeichnet, dass**
die Prozessinformationen optischer und/oder akustischer Art sind.

3. Sortieranlage (2) nach Anspruch 1 oder 2,
**dadurch gekennzeichnet, dass**
die dezentrale Funktionseinheit (34, 36) ein Mikrofon und/oder eine Kamera umfassen.

4. Sortieranlage (2) nach einem der Ansprüche 1 bis 3,
**dadurch gekennzeichnet, dass**
die dezentrale Funktionseinheit (34, 36) Soll-Prozessinformationen in Form von Bildern und/oder Frequenzspektren speichert.

5. Sortieranlage (2) nach einem der Ansprüche 1 bis 4,
**dadurch gekennzeichnet, dass**
die dezentrale Funktionseinheit (34, 36) eine Auswerteeinheit umfasst, die aufgenommene Prozessinformation in Form eines Bildvergleichs und/oder einer Fourier-Analyse untersucht.

6. Sortieranlage (2) nach einem der Ansprüche 1 bis 5,
**dadurch gekennzeichnet, dass**
die dezentrale Funktionseinheit (34, 36) einen Katalog von kollateralen Umgebungsinformationen aufweist und derartige Umgebungsinformationen in den Prozessinformationen im Zuge der Auswertung der Prozessinformation erkennt.

7. Sortieranlage (2) nach einem der Ansprüche 1 bis 6,
**dadurch gekennzeichnet, dass**
die dezentrale Funktionseinheit (34, 36) einen Katalog von auf einen Fehler hindeutenden Prozessinformationen aufweist, wobei bei einer detektierten Abweichung der aufgenommenen Prozessinformation von der Soll-Prozessinformation diese Abweichung mit dem Inhalt des Katalogs der auf einen Fehler hindeutenden Prozessinformation verglichen wird.

8. Sortieranlage (2) nach Anspruch 7,
**dadurch gekennzeichnet, dass**
bei einer Übereinstimmung der detektierten Abweichung mit einer der auf einen Fehler hindeutenden Prozessinformation der dieser Übereinstimmung zugrundeliegende Fehler an die Anlagensteuerung (30) übertragen wird.
